# EUROPÄISCHE PATENTSCHRIFT

(11) **EP 3 699 121 B1**
(45) Veröffentlichungstag und Bekanntmachung des Hinweises auf die Patenterteilung: **26.07.2023**
(21) Anmeldenummer: 20000080.0
(22) Anmeldetag: 25.02.2020
(51) Int. Cl.: B65G 69/28

(54) **ZUGANGSSYSTEM FÜR EISENBAHNKESSELWAGEN, VERSCHUBWAGEN UND VERFAHREN ZUM BEREITSTELLEN EINES ZUGANGS**
ACCESS SYSTEM FOR RTC, SHIFTING VEHICLE AND METHOD FOR PROVIDING ACCESS
SYSTÈME D'ACCÈS POUR UNE VOITURE-CITERNE FERROVIAIRE, VOITURE DE DÉPLACEMENT ET PROCÉDÉ DE FOURNITURE D'UN ACCÈS

(30) Priorität: 25.02.2019 DE 102019104757
(43) Veröffentlichungstag der Anmeldung: 26.08.2020
(73) Patentinhaber: Bornhorn, Heinz-Jürgen, 28857 Syke (DE)
(72) Erfinder: Bornhorn, Heinz-Jürgen, 28857 Syke (DE)
(74) Vertreter: Eisenführ Speiser

(56) Entgegenhaltungen:
- DE-A1- 3 615 737
- DE-U1- 8 508 014
- FR-A1- 2 104 694
- FR-A1- 2 289 371
- FR-A1- 2 498 170
- FR-A2- 2 351 829
- NL-A- 7 304 651
- US-A- 4 679 657
- US-A- 5 027 922

## Beschreibung

Die vorliegende Erfindung betrifft ein Zugangssystem für Eisenbahnkesselwagen, umfassend: mindestens einen Gleisabschnitt zur Aufnahme mehrerer Kesselwagen, in einer Be- und/oder Entladeposition, wobei jeder Kesselwagen jeweils eine verschließbare Öffnung an seiner Oberseite aufweist.

Zugangssysteme der eingangs genannten Art werden genutzt, um einen Zugang zu verschließbaren Öffnungen an der Oberseite von Kesselwagen bereitzustellen. Ein solcher Zugang ist beispielsweise zum Be- und Entladen und zu Wartungszwecken erforderlich.

Bei Kesselwagen mit einem sogenannten Bottom-Loading-System weisen die Kesselwagen im unteren Bereich eine Be- und Entladeöffnung auf, welche beispielsweise mit einer Tankanlage koppelbar ist. An der Oberseite solcher Kesselwagen ist ferner eine verschließbare Öffnung, ein sogenannter Domdeckel vorgesehen. Bei Kesselwagen mit Bottom-Loading-System ist es erforderlich, einen Zugang bereitzustellen, um den Domdeckel vor dem Be- oder Entladevorgang zu öffnen und einen Druckausgleich im Innenraum des Kesselwagens zu ermöglichen.

Die Anzahl von Kesselwagen in einem Zug und deren individuelle Abmessungen können sich unterscheiden und beeinflussen damit die Position der verschließbaren Öffnung der Kesselwagen auf dem Gleisabschnitt.

Bislang wurde ein Zugang zu den verschließbaren Öffnungen daher mittels einer Leiter an jedem Kesselwagen individuell bereitgestellt. Das entsprechende Bedien- und Wartungspersonal musste dabei zusätzlich durch eine Absturzsicherungsanlage, wie beispielsweise Seile und Auffanggurte, gesichert werden. Das Bereitstellen eines Zugangs zu den verschließbaren Öffnungen der Kesselwagen mittels Leitern ist allerdings aus Unfallschutzgründen und zur Optimierung der Be- und Entladeprozesse zu vermeiden.

Ferner sind aus dem Stand der Technik Zugangssysteme für Eisenbahnkesselwagen bekannt, welche eine Stahlbaukonstruktion mit einem Laufsteg, welche entlang des Gleisabschnittes verläuft, und einer Absturzsicherungsanlage aufweisen. Durch ein solches Zugangssystem ist ein Zugang zu den verschließbaren Öffnungen der Kesselwagen von dem Laufsteg aus bereitgestellt, sodass sich das Bedien- oder Wartungspersonal über den Laufsteg einem Kesselwagen und dessen verschließbarer Öffnung annähern kann. Das Bedien- oder Wartungspersonal muss anschließend auf das Dach des Kesselwagens klettern, um die verschließbare Öffnung des Kesselwagens zu öffnen. Die erforderliche Sicherung des Bedien- oder Wartungspersonals mittels einer Absturzsicherungsanlage, wie beispielsweise Seilen und Auffanggurten, ist dabei sehr aufwendig und anfällig für Bedienfehler.

Weitere Zugangssysteme für Eisenbahnkesselwagen sehen Stahlbaukonstruktionen vor, welche entlang der Gleisanlage verlaufen und für jeden Kesselwagen eine verschiebbar an der Stahlbaukonstruktion montierte Klapptreppen inklusive Schutzkorb aufweisen. Eine solche Klapptreppe inklusive Schutzkorb wird entsprechend der Länge des Kesselwagens in einem vordefinierten Bereich derart an der Stahlkonstruktion verschoben, dass mittels der Klapptreppe ein Zugang zu der verschließbaren Öffnung des Kesselwagens bereitgestellt wird. Der Schutzkorb stellt dabei eine Absturzsicherung für das Bedien- oder Wartungspersonal bereit.

Nachteilig bei einer solchen Anlage ist, dass jedem Kesselwagen eine entsprechende Klapptreppe inklusive Schutzkorb zugeordnet werden muss, da diese nur in begrenzten Bereichen verschiebbar sind.

Bekannte Zugangssysteme sind u. a. durch die Dokumente FR 2 104 694 , FR 2 351 829 oder FR 2 498 170 bekannt.

Zur Optimierung der Be- und Entladeprozesse und aus Unfallschutzgründen besteht daher weiterhin Bedarf nach kosteneffizienten Zugangssystemen für Eisenbahnkesselwagen, welche einen sicheren und kosteneffizienten realisierbaren Zugang zu den verschließbaren Öffnungen der Kesselwagen bereitstellen.

Es ist daher Aufgabe der Erfindung, ein Zugangssystem anzugeben, welches die vorstehend beschriebenen Nachteile möglichst weitgehend überwindet. Insbesondere sollte eine Lösung gefunden werden, welche das Unfallrisiko beim Bereitstellen eines Zugangs zu den Öffnungen der Kesselwagen reduziert und die Be- und Entladeprozesse und insbesondere die Prozesszeiten optimiert.

Die Erfindung löst die zugrundeliegende Aufgabe, indem sie ein Zugangssystem mit den Merkmalen von Anspruch 1 vorschlägt. Insbesondere schlägt die Erfindung vor, dass ein Zugangssystem der eingangs bezeichneten Art ferner eine benachbart zu dem Gleisabschnitt angeordnete sich in Gleislängsrichtung entlang des gesamten Gleisabschnitts erstreckende Tragstruktur mit mindestens einem Zugangsbereich und einer sich in Gleislängsrichtung erstreckenden Fahrspur, und einen Verschubwagen aufweist, der dazu eingerichtet ist, auf der Fahrspur der Tragstruktur entlang des Gleisabschnitts zu fahren, und derart verfahrbar ist, dass er an die Öffnung der Kesselwagen angenähert werden kann, um einen Zugang zu der verschließbaren Öffnung des Kesselwagens bereitzustellen.

Somit kann ein zu be- und entladender Zug mit mehreren Kesselwagen auf dem mindestens einen Gleisabschnitt angeordnet werden und unabhängig von der Dimensionierung der Kesselwagen und ihrer Anzahl mittels des Verschubwagens flexibel ein Zugang bereitgestellt werden. Durch den Verschubwagen, welcher entlang des gesamten Gleisabschnitts verfahrbar ist, kann der entsprechende Verschubwagen an jeden der Kesselwagen derart angenähert werden, dass mittels des Verschubwagens ein Zugang bereitgestellt wird, über welchen Bedien- oder Wartungspersonal Zugang zu den Öffnungen an der Oberseite der Kesselwagen erlangt.

Vorliegend wird unter einer Be- und Entladeposition eine Anordnung der Kesselwagen auf dem Gleisabschnitt verstanden, in welcher sie benachbart zu der Tragstruktur angeordnet sind. Entlang dieses Gleisabschnitts und der darauf angeordneten Kesselwagen kann dann der Verschubwagen verfahren werden kann. Ein Zugangsbereich zu der Tragstruktur kann beispielsweise in Form einer Treppe oder Leiter bereitgestellt werden. Durch diesen Zugangsbereich kann das Bedien- oder Wartungspersonal zu dem Verschubwagen gelangen und diesen auf der Fahrspur der Tragstruktur entlang des Gleisabschnitts verfahren. Die Fahrspur, auf welcher der Schubwagen fährt, ist derart vertikal beabstandet zu dem Boden angeordnet, dass der Verschubwagen im Wesentlichen auf Höhe der verschließbaren Öffnungen an der Oberseite der Kesselwagen verfahrbar ist.

Die Erfindung macht sich die Erkenntnis zunutze, dass somit ein einzelner Verschubwagen genutzt werden kann, um Zugang zu den verschließbaren Öffnungen jedes der aufgereihten Kesselwagen bereitzustellen. Somit kann der Verschubwagen den Kesselwagen bedarfsabhängig angenähert werden, um eine verschließbare Öffnung nach der anderen durch Bedien- oder Wartungspersonal zu öffnen.

Gemäß einer bevorzugten Ausführungsform weist der Verschubwagen mindestens eine Arbeitsbühne auf, welche dazu eingerichtet ist, einen Zugang zu der verschließbaren Öffnung eines Kesselwagens bereitzustellen. Bevorzugt erstreckt sich eine solche Arbeitsbühne seitlich über die Tragstruktur hinaus in Richtung der verschließbaren Öffnung des Kesselwagens. Damit stellt eine solche Arbeitsbühne eine zweckmäßige Erweiterung des Verschubwagens dar, mittels welcher der Zugang zu den Öffnungen der Kesselwagen erleichtert wird.

Vorzugsweise ist die Arbeitsbühne mit der Oberseite des Kesselwagens in Anlage bringbar, wenn der Verschubwagen an die Öffnung des jeweiligen Kesselwagens angenähert ist. Durch das In-Anlage-bringen der Arbeitsbühne mit der Oberseite des Kesselwagens wird die Stabilität der Arbeitsbühne erhöht und damit die Betriebssicherheit des Zugangssystems gesteigert.

Vorzugsweise ist die Arbeitsbühne schwenkbar an dem Verschubwagen montiert und von einer Parkposition in eine Arbeitsposition verschwenkbar, in welcher die Arbeitsbühne mit der jeweiligen Oberseite des Kesselwagens in Anlage bringbar ist. Durch das Verschwenken der Arbeitsbühne in eine Arbeitsposition ist die Arbeitsbühne mit der Oberseite von Kesselwagen unterschiedlicher Höhe in Anlage bringbar. Somit wird ein flexibles Zugangssystem bereitgestellt, welches durch das In-Anlage-bringen der Arbeitsbühne mit der Oberseite des Kesselwagens eine ausreichende Stabilität und einen einfachen und effizienten Betrieb vorsieht. Gemäß einer bevorzugten Ausführungsform ist die Arbeitsbühne quer zur Gleislängsrichtung schwenkbar an dem Verschubwagen montiert. Durch das Verschwenken der Arbeitsbühne quer zur Gleislängsrichtung wird der Abstand zwischen Verschubwagen und der verschließbaren Öffnung an der Oberseite des jeweiligen Kesselwagens überbrückt und ein sich von dem Verschubwagen hin zu der Öffnung erstreckender Zugang bereitgestellt.

Vorzugsweise ist die Arbeitsbühne schwenkbar und teleskopierbar an dem Schubwagen montiert. Somit ist der bereitgestellte Zugang individuell an das Abmaß des jeweiligen Kesselwagens anpassbar. Die Position der verschließbaren Öffnung senkrecht zur Gleislängsrichtung kann somit variieren und durch das Teleskopieren der Arbeitsbühne und/oder das Verschwenken ein Zugang zu den verschließbaren Öffnungen bereitgestellt werden.

Gemäß einer besonders bevorzugten Ausführungsform der Erfindung weist der Verschubwagen einen Antrieb zum Verschwenken der Arbeitsbühne, vorzugsweise einen pneumatischen oder hydraulischen Antrieb, auf. Somit wird der Betrieb des Verschubwagens und insbesondere auch der Arbeitsbühne durch Bedien- oder Wartungspersonal vereinfacht. Somit muss das Verschieben, Verfahren oder Teleskopieren der Arbeitsbühne nicht von Hand bewirkt werden. Folglich wird die Bedienung vereinfacht und das Verletzungsrisiko durch einen Betrieb von Hand reduziert.

Gemäß einer besonders bevorzugten Ausführungsform der Erfindung weist der Verschubwagen und/oder die Fahrspur eine Mehrzahl von Rollen zum Verfahren des Verschubwagens entlang der Fahrspur auf. Rollen, bzw. Räder, ermöglichen dabei ein zweckmäßiges und verschleißarmes Verfahren des Verschubwagens auf der Fahrspur und eine einfache Wartung.

Besonders bevorzugt weist der Verschubwagen und/oder die Fahrspur beidseitig zumindest ein Paar Seiten-Führungsrollen zum seitlichen Führen des Verschubwagens auf. Die Erfindung macht sich die Erkenntnis zunutze, dass Seiten-Führungsrollen das Entgleisen des Verschubwagens auf kurvigen Strecken vermeiden.

Besonders bevorzugt ist zumindest ein Paar Rollen mit dem Verschubwagen gekoppelt und einer bodenseitigen Kontaktfläche der Fahrspur in Anlage. Somit greifen die Rollen bzw. Räder von unten an die Fahrspur an, sodass der Verschubwagen bei negativen G-Kräften oder dem Verschwenken der Arbeitsbühne der Verschubwagen nicht von der Fahrspur abheben kann.

Vorzugsweise weist der Verschubwagen einen Antrieb zum Verfahren des Verschubwagens in Gleislängsrichtung auf. Somit wird der Betrieb durch Bedien- oder Wartungspersonal vereinfacht, sodass der Verschubwagen nicht von Hand verfahren werden muss, sondern mittels eines Antriebs in einfacher Weise verfahrbar ist. Der Be- und Entladeprozess wird somit weiter optimiert sowie die Wartungszeiten reduziert.

Gemäß einer bevorzugten Ausführungsform der Erfindung weist der Verschubwagen eine Arretiereinrichtung zum Arretieren des Verschubwagens an der Tragstruktur auf. Durch eine solche Arretiereinrichtung wird die Betriebssicherheit erhöht, da insbesondere beim Verschwenken der Arbeitsbühne oder dem Betreten der Arbeitsbühne durch Bedienperson ein Verfahren des Verschubwagens verhindert wird. Dies erhöht die Betriebssicherheit und verhindert Schäden am Kesselwagen und/oder der Arbeitsbühne bzw. des Verschubwagens selbst.

Vorzugsweise weist der Verschubwagen ein umlaufendes Geländer und mindestens einen stirnseitigen Zugang auf. Somit weist der Verschubwagen eine Absturzsicherung auf, welche das Bedien- oder Wartungspersonal in zweckmäßig und zuverlässig gegen einen möglichen Absturz sichert. Eine gezielte Aktion des Bedien- oder Wartungspersonals, wie das Anlegen von Sicherheitsgurten ist dabei nicht erforderlich. Durch einen Zugang ist der Verschubwagen ferner in einfacher Weise begehbar.

Gemäß einer weiteren bevorzugten Ausführungsform der Erfindung weist der Verschubwagen einen auf der Arbeitsbühne angeordneten Schutzkorb zum Sichern des Bedienpersonals auf. Die Erfindung macht sich dabei die Erkenntnis zunutze, dass ein solcher Schutzkorb eine ausreichende Absturzsicherung für das Bedienpersonal darstellt, und zugleich den Zugang zu der verschließbaren Öffnung an der Oberseite des Kesselwagens freigibt.

Vorzugsweise weist der Verschubwagen mindestens ein Beleuchtungsmittel zur Beleuchtung des Verschubwagens und/oder der Oberseite der Kesselwagen auf. Somit wird der Betrieb auch unter schwierigen Witterungsbedingungen und in der Nacht sichergestellt. Die Betriebssicherheit wird somit weiter erhöht.

Vorzugsweise weist der Verschubwagen eine Blitzleuchte auf. Eine solche Blitzleuchte kann, beispielsweise bei Dunkelheit anzeigen, wenn der Verschubwagen im Betrieb ist, sodass Bedien- oder Wartungspersonal nicht mittels des Zugangs die Tragstruktur betreten kann und durch das Verfahren des Wagens verletzt wird. Ferner kann eine solche Blitzleuchte ein Warnsignal beispielsweise für Systemzustände bereitstellen, welche von der Norm abweichen und ein Sicherheitsrisiko für das Wartungs- und Bedienpersonal darstellen.

Gemäß einer weiteren bevorzugten Ausführungsform der Erfindung weist die Tragstruktur eine sich in Gleislängsrichtung im Wesentlichen horizontal erstreckende Plattform auf. Somit ist die Tragstruktur in Gleislängsrichtung mittels der Plattform begehbar, sodass auch bei einer Betriebsstörung ein Fluchtweg vom Verschubwagen bereitgestellt wird, bzw. die Tragstruktur zu Wartungszwecken durch Wartungspersonal begehbar ist.

Gemäß einem besonders bevorzugten Ausführungsbeispiel ist der Gleisabschnitt ein erster Gleisabschnitt, wobei das Zugangssystem ferner einen zweiten Gleisabschnitt zur Aufnahme mehrerer Kesselwagen aufweist, und wobei die Tragstruktur zwischen dem ersten und zweiten Gleisabschnitt angeordnet ist. Somit wird die Anzahl an Kesselwagen, zu deren verschließbaren Öffnungen mittels des Zugangssystems ein Zugang bereitgestellt wird, erhöht.

Werden beispielsweise die Kesselwagen auf dem ersten und auf dem zweiten Gleisabschnitt im Wesentlichen parallel zueinander platziert, kann durch Verfahren des Verschubwagens ein Zugang zu der verschließbaren Öffnung des Kesselwagens auf dem ersten Gleisabschnitt und einem Zugang zur verschließbaren Öffnung des Kesselwagens auf dem zweiten Gleisabschnitt bereitgestellt werden. Danach kann die Prozesszeit reduziert werden, was zugleich die Kosten senkt und den Be- und Entladeprozess.

Gemäß einer weiteren bevorzugten Ausführungsform der Erfindung ist die Tragstruktur nach Art eines Fachwerks ausgebildet, umfassend: einen sich in Gleislängsrichtung erstreckenden bodenseitigen Unterholm, und einem ersten sich in Gleislängsrichtung erstreckenden Oberholm, und einem zweiten sich in Gleislängsrichtung erstreckenden Oberholm, welcher horizontal beabstandet zu dem ersten Oberholm angeordnet ist. Durch den Unterholm und den ersten und zweiten Oberholm, welche sich in Gleislängsrichtung erstrecken, wird die Stabilität der Tragstruktur erhöht.

Vorliegend wird unter der Ausbildung der Tragstruktur nach Art eines Fachwerks verstanden, dass die Tragstruktur aus zug- und druckbeanspruchten Stabwerkselemente, wie beispielsweise Streben, Stäben, Trägern, Rohren oder dergleichen besteht, und deren Enden in den Knotenpunkten miteinander verbunden und dem Unterholm bzw. zumindest einem der Oberholme gekoppelt sind.

Vorzugsweise umfasst die Tragstruktur ferner eine Mehrzahl an Diagonalstreben, welche mit dem Unterholm und dem ersten und/oder zweiten Oberholm gekoppelt sind, und/oder eine Mehrzahl an Querstreben, welche mit dem ersten und zweiten Oberholm gekoppelt sind. Die Diagonalstreben und Querstreben bilden somit die Stabwerkselemente des Fachwerks, wobei das Fachwerk durch den Unterholm und den ersten und zweiten Oberholm stabilisiert wird. Die Tragstruktur ist somit in vorteilhafter Weise als stabile und leichte Struktur ausgebildet.

Weiterhin bevorzugt weist das Zugangssystem eine mobile Sicherungseinrichtung zur Sicherung von Bedienpersonal an dem Verschubwagen und/oder der Tragstruktur auf. Eine solche mobile Sicherungseinrichtung kann beispielsweise zu Wartungszwecken, beim Passieren der Plattform oder im laufenden Betrieb verwendet werden. Mit einer solchen mobilen Sicherungseinrichtung kann dabei individuell auf die jeweiligen Betriebszustände reagiert, die Betriebssicherheit erhöht und somit das Unfallrisiko minimiert werden.

Gemäß einer weiteren bevorzugten Ausführungsform umfasst das Zugangssystem eine Steuereinrichtung, welche dazu eingerichtet ist, die Position des Verschubwagens und/oder der Arbeitsbühne zu erfassen, und/oder den Antrieb des Verschubwagens und/oder der Arbeitsbühne zu steuern. Durch eine solche Steuerungseinrichtung wird die Betriebssicherheit erhöht und die Bedienung vereinfacht.

Die Steuerung der Antriebe wird in vorteilhafter Weise präzisiert, wenn die Steuereinrichtung ferner wesentliche Betriebsinformationen, wie die Position des Verschubwagens und/oder der Arbeitsbühne, erfassen kann und basierend auf diesen Informationen die Antriebe steuert. So kann der Antrieb des Verschubwagens bzw. der Arbeitsbühne derart gesteuert werden, dass der Verschubwagen bzw. die Arbeitsbühne in eine Sollposition verfahren bzw. verschwenkt wird. Die Betriebsinformationen können der Steuereinrichtung beispielsweise durch Sensoren bereitgestellt werden.

Die Erfindung wurde vorstehend in Bezug auf einen ersten Aspekt beschrieben. Die Erfindung betrifft in einem zweiten Aspekt ferner einen Verschubwagen wie er im Anspruch 14 beschrieben ist.

Die erfindungsgemäßen Vorteile des eingangs beschriebenen Zugangssystems gelten in gleicher Weise für den Verschubwagen, und umgekehrt. Bevorzugte Ausführungsformen des erfindungsgemäßen Zugangssystems sind zugleich bevorzugte Ausführungsformen des Verschubwagens für ein solches Zugangssystem und umgekehrt.

Die Erfindung betrifft in einem dritten Aspekt ein Verfahren zum Bereitstellen eines Zugangs zu einer verschließbaren Öffnung an der Oberseite eines Eisenbahnkesselwagens mittels eines Zugangssystems der vorstehend beschriebenen Art. Die Erfindung löst die vorstehend beschriebene Aufgabe in einem dritten Aspekt dadurch, dass das Verfahren die Schritte umfasst:
- Bereitstellen mehrerer Kesselwagen auf einem Gleisabschnitt in Gleislängsrichtung aufgereiht in einer Be- und Entladeposition benachbart zu der Tragstruktur,
- Verfahren eines Verschubwagens auf einer Fahrspur der Tragstruktur entlang des Gleisabschnitts, sodass er an die Öffnung eines Kesselwagens angenähert wird,
- Bereitstellen eines Zugangs zu der verschließbaren Öffnung des jeweiligen Kesselwagens.

Hinsichtlich der erreichten Vorteile eines solchen Verfahrens sei auf die obenstehenden Ausführungen und Beispiele eines Zugangssystems für einen Eisenbahnkesselwagen verwiesen. Die Vorteile und bevorzugten Ausführungsformen des vorstehend beschriebenen Zugangssystems und Verschubwagens sind ebenso die bevorzugten Ausführungsbeispiele und Vorteile des Verfahrens und umgekehrt.

Vorzugsweise umfasst das Verfahren ferner den Schritt des Verfahrens des Vorschubwagens auf der Fahrspur der Tragstruktur entlang des Gleisabschnitts, sodass er an die Öffnung eines weiteren auf dem Gleis angeordneten, vorzugsweise benachbarten, Kesselwagens angenähert wird. Somit ist das Bereitstellen eines Zugangs zu der verschließbaren Öffnung an der Oberseite der Kesselwagen beliebig wiederholbar, sodass zu der Öffnung jedes Kesselwagens auf dem Gleisabschnitt ein Zugang bereitgestellt werden kann.

Vorzugsweise umfasst das Bereitstellen eines Zugangs zu der verschließbaren Öffnung des jeweiligen Kesselwagens ferner das Verschwenken der Arbeitsbühne von einer Parkposition in eine Arbeitsposition, in welcher die Arbeitsbühne mit der jeweiligen Oberseite des Kesselwagens in Anlage bringbar ist. Ein Verfahren dieser Art macht sich die Erkenntnis zunutze, dass durch das Verschwenken der Arbeitsbühne von einer Parkposition in eine Arbeitsposition, in welcher die Arbeitsbühne mit der jeweiligen Oberseite des Kesselwagens in Anlage bringbar ist, ein Zugang zu Kesselwagen variabler Höhe bereitgestellt werden kann. Die Arbeitsbühne ist dann gegebenenfalls schräg zur Horizontalen ausgerichtet, stellt aber in jedem Fall einen zweckmäßigen Zugang zu der verschließbaren Öffnung an der Oberseite des jeweiligen Kesselwagens bereit.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1: eine schematische Draufsicht des Zugangssystems gemäß einer bevorzugten Ausführungsform.

- Fig. 2: eine schematische Seitenansicht eines Zugangssystems gemäß einer bevorzugten Ausführungsform,
- Fig. 3: eine schematische Seitenansicht eines Zugangssystems gemäß einer zweiten bevorzugten Ausführungsform,
- Fig. 4: eine schematische Seitenansicht eines Ausschnitts des Zugangssystems gemäß Fig. 3,
- Fig. 5: eine schematische Draufsicht eines Ausschnitts des Zugangssystems gemäß Fig. 3,
- Fig. 6: eine schematische Draufsicht eines Ausschnitts einer dritten des Zugangssystems gemäß Fig. 3,
- Fig. 7: eine perspektivische Darstellung einer Tragstruktur gemäß einer ersten bevorzugten Ausführungsform,
- Fig. 8: eine schematische Seitenansicht eines Ausschnitts des Zugangssystems gemäß Fig. 1,
- Fig. 9: eine schematische Draufsicht eines Ausschnitts einer Tragstruktur.

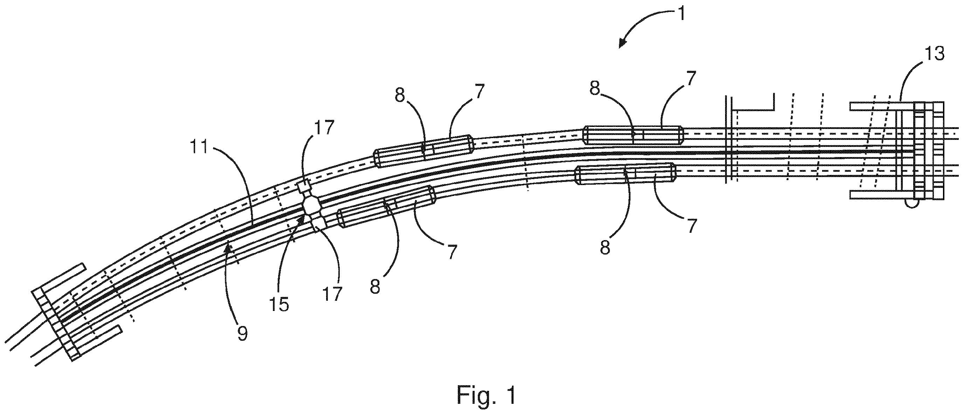

Fig. 1 zeigt ein Zugangssystem 1 schematisch in einer Draufsicht. Das Zugangssystem 1 umfasst einen ersten Gleisabschnitt 3 und einen zumindest abschnittsweise parallel zu dem ersten Gleisabschnitt angeordneten zweiten Gleisabschnitt 5. Auf dem ersten Gleisabschnitt 3 und dem zweiten Gleisabschnitt 5 ist eine Mehrzahl von Eisenbahnkesselwagen 7 angeordnet. Die Eisenbahnkesselwagen 7 weisen jeweils an ihrer Oberseite eine verschließbare Öffnung 8 auf. Der dargestellte Aufbau des Gleisabschnitts ist exemplarisch zu verstehen. Es können insbesondere die Gleisanlagen als Bogengleisanlage mit unterschiedlichen Seitenabständen, oder als gerade Gleisanlage ausgeführt sein.

Der erste Gleisabschnitt 3 und der zweite Gleisabschnitt 5 sind im Wesentlichen parallel zueinander angeordnet und verlaufen zumindest abschnittsweise gekrümmt.

Das Zugangssystem 1 umfasst ferner eine Tragstruktur 9 mit einer Fahrspur 11 und einem Zugang 13 zu der Tragstruktur 9 und einen Verschubwagen 15 auf, welcher fahrbar auf der Fahrspur 11 gelagert ist.

Die Tragstruktur 9 ist zwischen dem ersten Gleisabschnitt 3 und dem zweiten Gleisabschnitt 5 angeordnet ist und erstreckt sich in Gleislängsrichtung.

Der Verschubwagen 15 weist vorzugsweise zwei Arbeitsbühnen 17a auf, wobei eine Arbeitsbühne sich seitlich hin zu dem ersten Gleisabschnitt 3 erstreckt und eine zweite Arbeitsbühne 17b sich seitlich hin zu dem zweiten Gleisabschnitt 5 erstreckt. Die Arbeitsbühnen 17 erstrecken sich dabei in einen Bereich, in welchem sie die Kesselwagen 7 zumindest teilweise überragen.

Der Verschubwagen 15 mit den zwei Arbeitsbühnen 17a, b ist dabei derart auf der Fahrspur 11 verfahrbar, dass er an die Öffnung 8 der Kesselwagen 7 angenähert werden kann, um einen Zugang zu der verschließbaren Öffnung 8 des jeweiligen Kesselwagens 7 bereitzustellen. Dadurch, dass die Arbeitsbühnen 17a, b, wenn der Verschubwagen 15 an den jeweiligen Kesselwagen 7 angenähert ist, diesen zumindest teilweise überragt, wird ein sicherer Zugang zu der verschließbaren Öffnung 8 bereitgestellt,

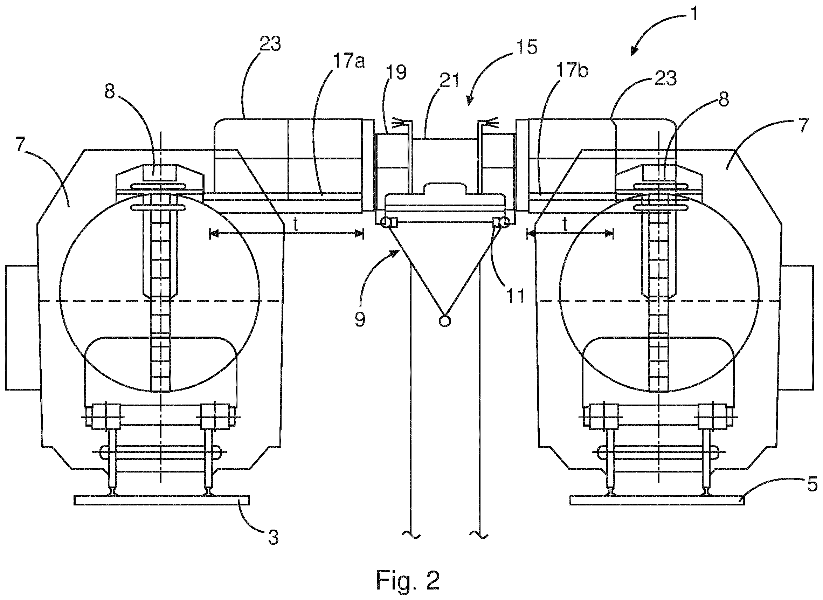

Fig. 2 zeigt das Zugangssystem 1 in einer Position, in welcher der Verschubwagen 15 an einem Kesselwagen 7 auf dem ersten Gleisabschnitt 3 und an einem Kesselwagen 7 auf dem zweiten Gleisabschnitt 5 angenähert ist. Der Verschubwagen 15 ist dabei auf der Fahrspur 11 der Tragstruktur 9 angeordnet und auf dieser verfahrbar.

Die beiden Arbeitsbühnen 17a, 17b des Verschubwagens 15 sind mit der Oberseite des jeweiligen Kesselwagens 7 in Anlage. Die Arbeitsbühne 17a ist vorzugsweise teleskopierbar und erstreckt sich, etwa im teleskopierten Zustand, dabei weiter in Richtung des Kesselwagens, weist also eine größere Tiefe t auf, als die Arbeitsbühne 17b. Somit können abweichende Gleisabstände oder unterschiedliche Dimensionierungen der Kesselwagen ausgeglichen werden.

Der Verschubwagen 15 umfasst ferner ein umlaufendes Geländer 19 mit einem stirnseitigen Zugang 21. Das umlaufende Geländer 19 ist dazu eingerichtet, das Bedien- oder Wartungspersonal während des Betriebs auf dem Verschubwagen zu sichern. Ferner ist auf den Arbeitsbühnen 17a, 17b jeweils ein Schutzkorb 23 angeordnet, welcher dazu eingerichtet ist, das Bedien- oder Wartungspersonal zu sichern, während ein Zugang zu der verschließbaren Öffnung 8 des Kesselwagens 7 bereitgestellt wird.

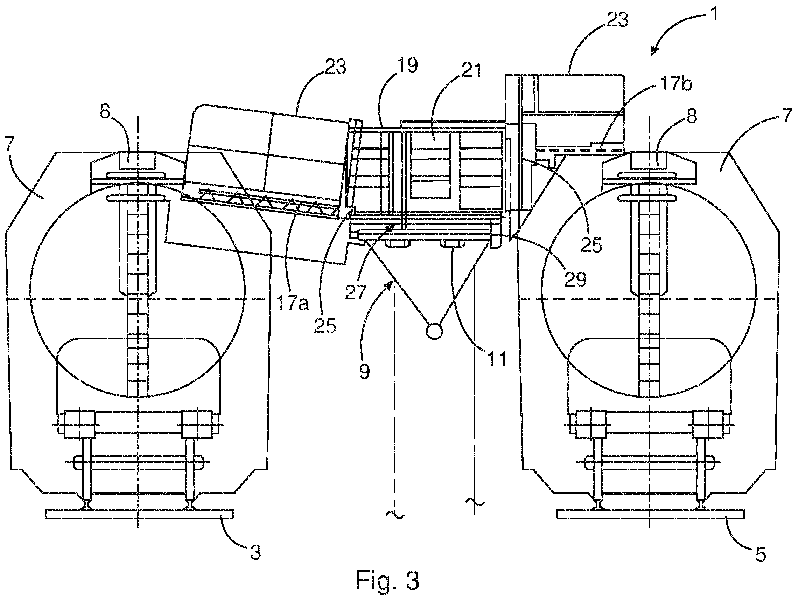

Fig. 3 zeigt ein Zugangssystem 1' gemäß einem zweiten bevorzugten Ausführungsbeispiel. Das Zugangssystem 1' unterscheidet sich von dem in Fig. 2 beschriebenen Zugangssystem 1 dadurch, dass der Verschubwagen 15 ferner einen Antrieb 25 für die Arbeitsbühnen 17a, 17b aufweist.

Der Antrieb 25 ist dazu eingerichtet, die Arbeitsbühne (oder Treppenanlage) 17a, 17b zu verschwenken oder linear in vertikaler oder horizontaler Richtung zu verfahren. Durch das Verfahren der Arbeitsbühnen 17a, 17b in vertikaler Richtung, kann ein Toleranzbereich hinsichtlich der Höhe der Kesselwagen 7 bereitgestellt werden, in welchem die Höhe der Kesselwagen 7variieren kann, dass Zugangssystem 1' aber weiterhin einen Zugang bereitstellt.

Dieser Toleranzbereich wird durch den maximalen Hubbereich der Arbeitsbühne 17a, 17b an dem Verschubwagen 15 bestimmt.

Ferner ist der Antrieb 25 dazu eingerichtet, die Arbeitsbühne 17a derart zu verschwenken, dass sie mit der Oberseite eines Kesselwagens 7 derart in Anlage bringbar ist, dass sie einen Zugang zu der Öffnung 8 bereitstellt.

Der Verschubwagen 15 weist ferner einen Antrieb 27 zum Verfahren des Kesselwagens entlang der Fahrspur 11 auf. Durch einen solchen Antrieb 27 für den Verschubwagen 15 kann auf den Handbetrieb verzichtet werden und die Bedienung wird somit erleichtert.

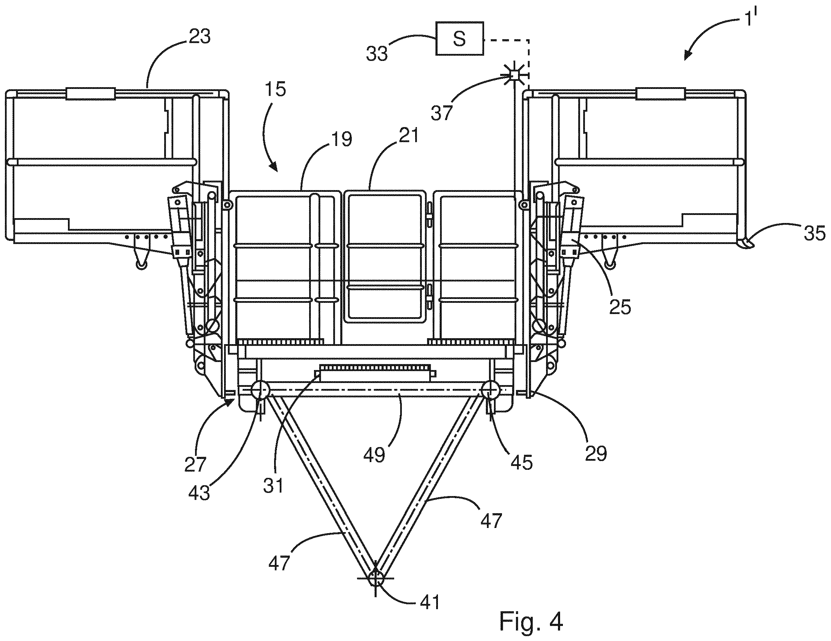

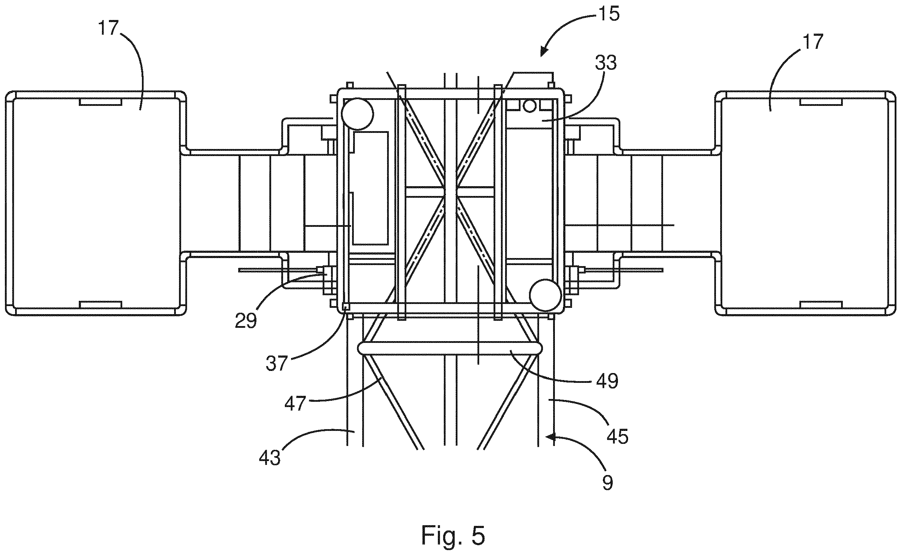

Wie insbesondere die schematische Seitenansicht und Draufsicht gemäß der Figuren 4 und 5 des Zugangssystems 1' zeigen, weist der Verschubwagen 15 ferner eine Arretiereinrichtung 29 zum Arretieren des Verschubwagens 15 an der Tragstruktur 9 auf. Die Arretiereinrichtung 29 kooperiert derart mit der Tragstruktur 9, dass der Verschubwagen 15 zum Bereitstellen eines Zugangs zu der Öffnung eines der Kesselwagen in der entsprechenden Position, in welcher er an diesen Kesselwagen angenähert ist arretiert wird.

Die Tragstruktur 9 des Zugangssystems 1' umfasst ferner eine Plattform 31, welche sich in Gleislängsrichtung erstreckt. Die Plattform 31 erstreckt sich im Wesentlichen in horizontaler Richtung und stellt entlang der Tragstruktur einen begehbaren Zugang bereit. Eine solche Plattform 31 kann beispielsweise zu Wartungszwecken oder im Falle einer Betriebsstörung des Verschubwagens genutzt werden, um das Zugangssystem 1' betreten oder verlassen zu können.

Das Zugangssystem 1' umfasst ferner eine Steuereinrichtung 33, welche dazu eingerichtet ist, den Antrieb 25 der Arbeitsbühnen und vorzugsweise den Antrieb 27 des Verschubwagens 15 zu steuern. Ferner ist die Steuereinrichtung 33 bevorzugt dazu eingerichtet, die Position der Arbeitsbühne 17a, 17b und des Verschubwagens 15 zu erfassen.

Der Verschubwagen 15 weist ferner ein Beleuchtungsmittel 35 zum Beleuchten des jeweiligen Kesselwagens 7 und insbesondere der verschließbaren Öffnung 8 auf.

Ferner weist der Verschubwagen 15 eine Blitzleuchte 37 auf, welche den Betrieb des Verschubwagens 15 anzeigt.

Die Tragstruktur 9 ist nach Art eines Fachwerks ausgebildet und umfasst einen Unterholm 41, welcher sich im Wesentlichen horizontal in Gleislängsrichtung erstreckt sowie einen ersten Oberholm 43 und einen zweiten horizontal beabstandet zu dem ersten Oberholm angeordneten zweiten Oberholm 45. Der Unterholm 41, der erste und der zweite Oberholm 43, 45 erstrecken sich im Wesentlichen in horizontaler Richtung in Gleislängsrichtung.

Der Unterholm 41 und der erste Oberholm 43 sowie der Unterholm 41 und der zweite Oberholm 45 werden jeweils durch eine Mehrzahl von Diagonalstreben 47 miteinander verbunden. Die Diagonalstreben können dabei in einer Ebene verlaufen, welche sich normal zur Gleislängsrichtung erstreckt, wobei bevorzugt weitere Diagonalstreben schräg zu dieser Ebene zwischen dem ersten Oberholm 43 und dem Unterholm 41 sowie dem zweiten Oberholm 45 und dem Unterholm 41 verlaufen.

Der erste Oberholm 43 und der zweite Oberholm 45 werden durch eine Mehrzahl von Querholmen 49 miteinander verbunden. Die Querholmen 49 verlaufen dabei im Wesentlichen horizontal und quer zur Gleislängsrichtung.

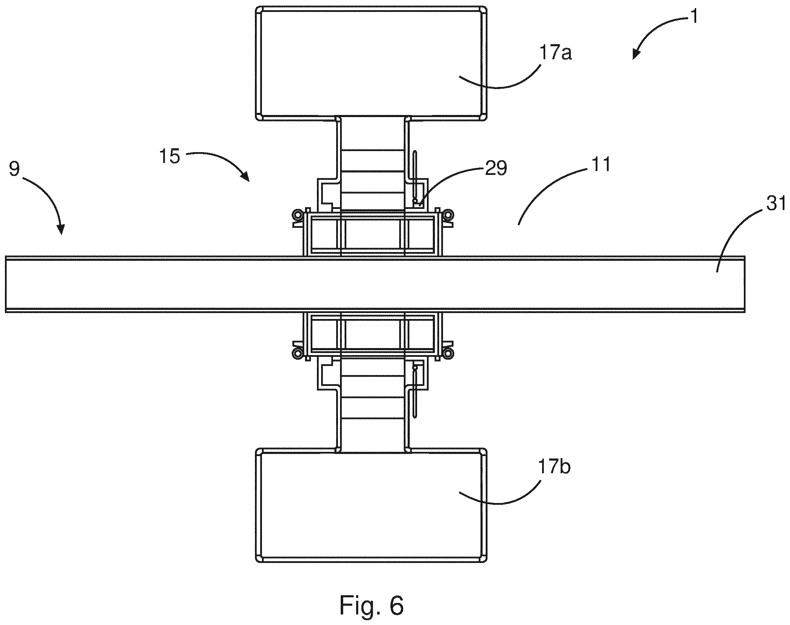

Fig. 6 zeigt einen Ausschnitt des Zugangssystems 1 in einer schematischen Draufsicht. Die Tragstruktur 9 weist eine Plattform 31 auf, welche sich in Gleislängsrichtung erstreckt und mittig zwischen der ersten und der zweiten Arbeitsbühne angeordnet ist.

Der Verschubwagen 15 kann auf der Fahrspur 11 entlang der Plattform 31 verfahren werden. Die Arbeitsbühnen 17a und 17b des Verschubwagens 15 sind dabei im Wesentlichen horizontal beabstandet zu der Plattform 31 angeordnet.

Durch das Verfahren des Verschubwagens 15 entlang der Fahrspur 11 werden die Arbeitsbühnen 17a, 17b an die jeweiligen Kesselwagen (nicht gezeigt) derart angenähert, dass sie einen Zugang bereitstellen. Durch die horizontale Beabstandung der Arbeitsbühnen 17a, 17b zu der Plattform 31 überragen diese im angenäherten Zustand den Kesselwagen (nicht gezeigt) derart, dass sie benachbart zu der verschließbaren Öffnung des jeweiligen Kesselwagens abschließen und somit einen ausreichenden Zugang bereitstellen.

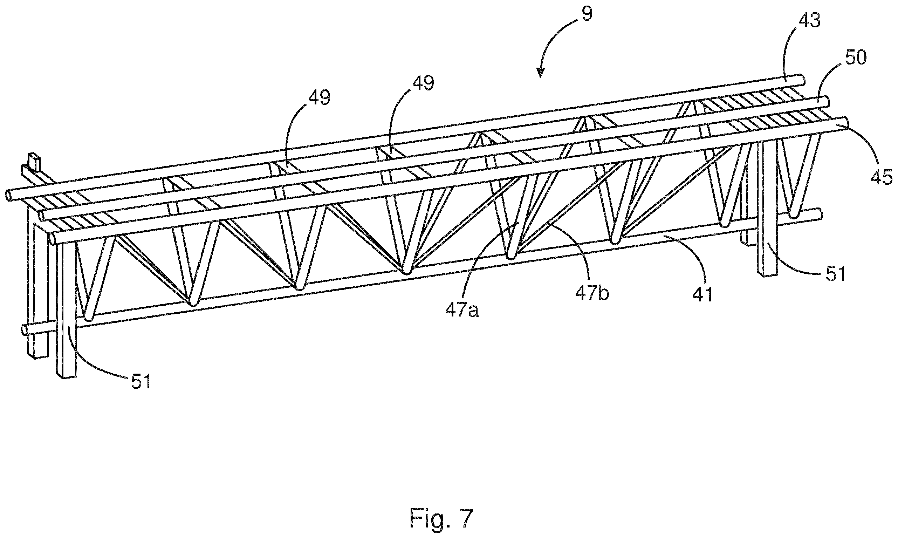

Fig. 7 zeigt die Tragstruktur 9 des Zugangssystems 1, 1' in einer perspektivischen Ansicht. Die Tragstruktur 9 umfasst den Unterholm 41, welcher sich im Wesentlichen horizontal in Gleislängsrichtung erstreckt.

Vertikal beabstandet zu dem Unterholm 41 sind der erste Oberholm 43 und der zweite Oberholm 45 angeordnet. Der erste Oberholm 43 und der zweite Oberholm 45 sind dabei horizontal beabstandet zueinander angeordnet. Zwischen dem ersten Oberholm 43 und dem zweiten Oberholm 45 ist ein dritter Oberholm 50 angeordnet, welcher sich parallel zu diesen erstreckt.

Der Unterholm 41 und die Oberholme 43, 45, 50 sind mit einer Tragstruktur 51 gekoppelt, welche vorzugsweise ein Fundament aufweist.

Die Tragstruktur 9 weist ferner eine Mehrzahl von Diagonalstreben 47 auf, welche den Unterholm 41 mit dem ersten Oberholm 43 bzw. den Unterholm 41 mit dem zweiten Oberholm 45 verbinden.

Ein Teil der Diagonalstreben 47a ist dabei in einer Ebene angeordnet, welche sich orthogonal zur Gleislängsrichtung erstreckt, ein weiterer Teil der Diagonalstreben 47b ist schräg zu dieser Ebene angeordnet.

Bevorzugt sind benachbarte Diagonalstreben entweder in einem Knotenpunkt angrenzend an die Oberholme 43, 45 und miteinander gekoppelt oder in einem Knotenpunkt angrenzend an den Unterholm 41. Durch diese schräg verlaufenden Diagonalstreben 47b wird die Schubsteifigkeit der Tragstruktur weiter erhöht.

Die Diagonalstreben 47a sind auf Seiten des Unterholms mit dem vorangegangenen Diagonalstreben 47b gekoppelt und auf Seiten der Oberholme 43, 45 mit der nachfolgenden Diagonalstrebe 47b.

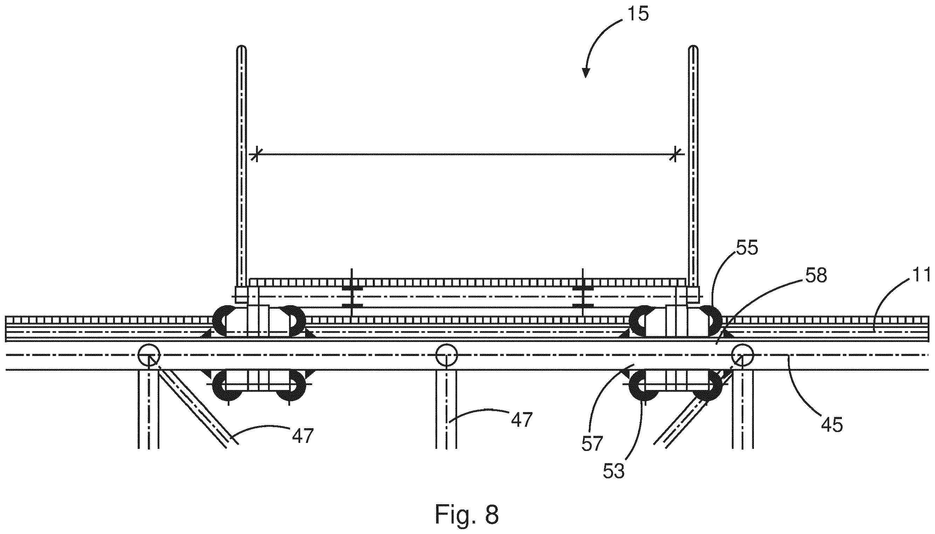

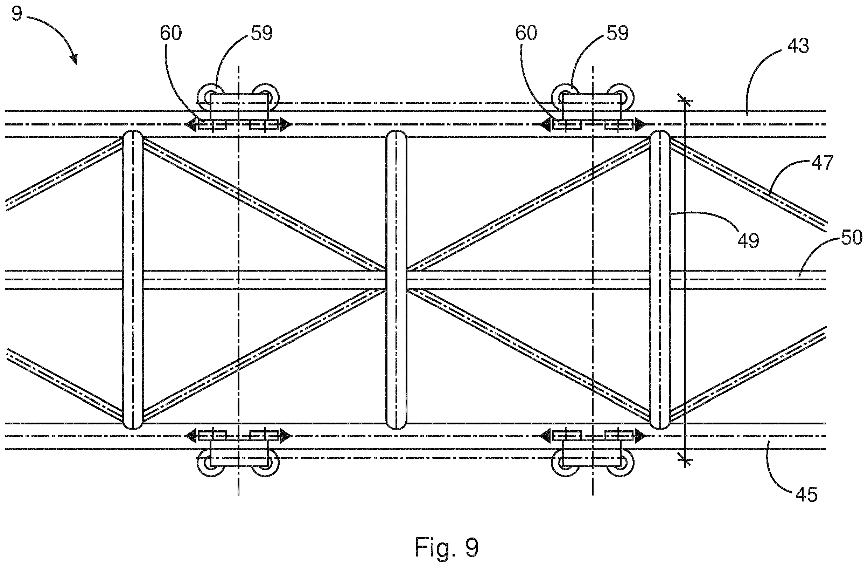

Wie die Figuren 8 und 9 zeigen, weist der Verschubwagen 15 Rollen, bzw. Räder zum Verfahren auf der Fahrspur 11 auf.

Der Verschubwagen 15 weist dabei gemäß Fig. 8 untere Rollen 53 und obere Rollen 55 auf. Die unteren Rollen 53 sind mit einer unteren Kontaktfläche 57 der Oberholme 43, 45 in Kontakt. Die oberen Rollen 55 sind dabei mit einer oberen Kontaktfläche 56 der Oberholme 43, 45 in Kontakt.

Insbesondere durch die unteren Rolleln 53 wird das Abheben des Verschubwagens von der Fahrspur 11 beim Begehen der Arbeitsbühnen und auch beim Verschwenken bzw. Verfahren der Arbeitsbühnen verhindert. Somit wird die Sicherheit insbesondere vor einer Entgleisung des Verschubwagens 15 reduziert.

Die oberen Rollen 55 sorgen dabei dafür, dass der Verschubwagen 15 leichtgängig über die Fahrspur verfahrbar ist und der Widerstand zwischen der Fahrspur bzw. den Oberholmen und dem Verschubwagen 15 minimiert wird.

Wie insbesondere Fig.9 zeigt, weist ferner auch die Tragstruktur 9 Rollen bzw. Räder auf. Die Tragstruktur 9 weist dabei Seiten-Führungsrollen 59 auf, welche mit dem Verschubwagen 15 in Kontakt bringbar sind und obere, wagenseitige Rollen 60, welche mit einer bodenseitigen Kontaktfläche des Verschubwagens 15 in Kontakt bringbar sind. Durch die Seiten-Führungsrollen 59 wird der Verschubwagen 15 insbesondere im Bereich von Kurven gegen eine mögliche Entgleisung gesichert. Ergänzend oder alternativ weist auch der Verschubwagen bevorzugt solche Seiten-Führungsrollen auf.

Ferner zeigt insbesondere Fig. 8, dass die schrägen Diagonalstreben 47b eine reduzierte Querschnittsfläche in einer Schnittebene quer zur Strebenlängsrichtung aufweist, verglichen mit den Diagonalstreben 47a. Somit ist die Tragstruktur besonders leicht ausgelegt und ermöglicht den Verzicht auf Verstärkungen des Bodens und der Fundamente.

### Bezugszeichenliste

- 1, 1': Zugangssystem
- 3: erster Gleisabschnitt
- 5: zweiter Gleisabschnitt
- 7: Eisenbahnkesselwagen
- 8: verschließbare Öffnung
- 9: Tragstruktur
- 11: Fahrspur
- 13: Zugang
- 15: Verschubwagen
- 17, 17a, 17b: Arbeitsbühne
- 19: umlaufendes Geländer
- 21: stirnseitigen Zugang
- 23: Schutzkorb
- 25: Antrieb zum Verschwenken der Arbeitsbühne
- 27: Antrieb zum Verfahren des Verschubwagens
- 29: Arretiereinrichtung
- 31: Plattform
- 33: Steuereinrichtung
- 35: Beleuchtungsmittel
- 37: Blitzleuchte
- 39: mobile Sicherungseinrichtung
- 41: Unterholm
- 43: erster Oberholm
- 45: zweiter Oberholm
- 47: Diagonalstreben
- 49: Querstreben
- 50: dritter Oberholm
- 51: Träger
- 53: untere Rollen
- 55: obere Rollen
- 57: bodenseitigen Kontaktfläche der Fahrspur
- 58: wagenseitige Kontaktfläche
- 59: Seiten-Führungsrollen
- 60: obere Rollen Tragstruktur

## Patentansprüche

1. Zugangssystem (1, 1') für Eisenbahnkesselwagen (7), umfassend:
- mindestens einen Gleisabschnitt (3, 5) zur Aufnahme mehrerer Kesselwagen (7) in einer Be- und Entladeposition, wobei jeder Kesselwagen (7) jeweils eine verschließbare Öffnung (8) an seiner Oberseite aufweist,
- eine benachbart zu dem Gleisabschnitt (3, 5) angeordnete sich in Gleislängsrichtung entlang des gesamten Gleisabschnitts erstreckende Tragstruktur (9) mit mindestens einem Zugangsbereich (13) und einer sich in Gleislängsrichtung erstreckenden Fahrspur (11), und
- ein Verschubwagen (15), der dazu eingerichtet ist, auf der Fahrspur (11) der Tragstruktur (9) entlang des gesamten Gleisabschnitts (3, 5) zu fahren, und derart verfahrbar ist, dass er an die Öffnung (8) eines jeden der Kesselwagen (7) angenähert werden kann, um einen Zugang zu der verschließbaren Öffnung (8) des jeweiligen Kesselwagens (7) bereitzustellen.

2. Zugangssystem (1, 1') nach Anspruch 1,
wobei der Verschubwagen (15) mindestens eine Arbeitsbühne (17, 17a, 17b) aufweist, welche dazu eingerichtet ist, einen Zugang zu der verschließbaren Öffnung (8) eines Kesselwagens (7) bereitzustellen, wobei vorzugsweise die Arbeitsbühne (17, 17a, 17b) mit der Oberseite des Kesselwagens (7) in Anlage bringbar ist, wenn der Verschubwagen (15) an die Öffnung (8) eines Kesselwagens (7) angenähert ist.

3. Zugangssystem (1, 1') nach Anspruch 2,
wobei die Arbeitsbühne (17, 17a, 17b) schwenkbar an dem Verschubwagen (15) montiert ist, und von einer Parkposition in eine Arbeitsposition verschwenkbar ist, in welcher die Arbeitsbühne (17, 17a, 17b) mit der jeweiligen Oberseite des Kesselwagens (7) in Anlage bringbar ist, wobei vorzugsweise die Arbeitsbühne (17, 17a, 17b) quer zur Gleislängsrichtung schwenkbar an dem Verschubwagen (15) montiert ist.

4. Zugangssystem (1') nach einem der Ansprüche 2 oder 3,
wobei der Verschubwagen (15) einen Antrieb (27) zum Verschwenken der Arbeitsbühne (17, 17a, 17b), vorzugsweise einen pneumatischen oder hydraulischen Antrieb, aufweist.

5. Zugangssystem (1, 1') nach einem der vorstehenden Ansprüche,
wobei der Verschubwagen (15) und/oder die Fahrspur (11) eine Mehrzahl von Rollen (53, 55, 59) zum Verfahren des Verschubwagens (15) entlang der Fahrspur (11) aufweist, wobei vorzugsweise der Verschubwagen (15) und/oder die Fahrspur (11) beidseitig zumindest ein Paar Seiten-Führungsrollen (59) zum seitlichen Führen des Verschubwagens (15) aufweist, und/oder wobei vorzugsweise zumindest ein Paar Rollen (53) mit dem Verschubwagen (15) gekoppelt und einer bodenseitigen Kontaktfläche der Fahrspur (11) in Anlage ist.

6. Zugangssystem (1') nach einem der vorstehenden Ansprüche,
wobei der Verschubwagen (15)
einen Antrieb (25) zum Verfahren des Verschubwagens (15) in Gleislängsrichtung aufweist und/oder
eine Arretiereinrichtung (29) zum Arretieren des Verschubwagens (15) und der Tragstruktur (9) aufweist, und/oder
ein umlaufendes Geländer (19) und mindestens einen stirnseitigen Zugang (21) aufweist.

7. Zugangssystem (1, 1') nach einem der Ansprüche 2 bis 6,
wobei der Verschubwagen (15) einen auf der Arbeitsbühne (17, 17a, 17b) angeordneten Schutzkorb (23) zum Sichern des Bedienpersonals aufweist.

8. Zugangssystem (1, 1') nach einem der vorstehenden Ansprüche,
wobei der Verschubwagen (15)
mindestens ein Beleuchtungsmittel (35) zur Beleuchtung des Verschubwagens (15) und/oder der Oberseite der Kesselwagen (7) aufweist und/oder
eine Blitzleuchte (37) aufweist.

9. Zugangssystem (1, 1') nach einem der Ansprüche 1 bis 8,
wobei die Tragstruktur (9) eine sich in Gleislängsrichtung im Wesentlichen horizontal erstreckende Plattform (31) aufweist.

10. Zugangssystem (1, 1') nach einem der Ansprüche 1 bis 9,
wobei der Gleisabschnitt (3, 5) ein erster Gleisabschnitt (3, 5) ist, und das Zugangssystem (1, 1') ferner einen zweiten Gleisabschnitt (3, 5) zur Aufnahme mehrerer Kesselwagen (7) aufweist, und
wobei die Tragstruktur (9) zwischen dem ersten und zweiten Gleisabschnitt (3, 5) angeordnet ist.

11. Zugangssystem (1, 1') nach einem der Ansprüche 1 bis 10
wobei Tragstruktur (9) nach Art eines Fachwerks ausgebildet ist, umfassend:
- einen sich in Gleislängsrichtung erstreckenden bodenseitigen Unterholm (41),
- einen ersten sich in Gleislängsrichtung erstreckenden Oberholm (43), und
- einen zweiten sich in Gleislängsrichtung erstreckenden Oberholm (45), welcher horizontal beabstandet dem ersten Oberholm (43) angeordnet ist,
wobei vorzugsweise die Tragstruktur (9) ferner umfasst:
- eine Mehrzahl an Diagonalstreben (49), welche mit dem Unterholm (41) und dem ersten und/oder zweiten Oberholm (43, 45) gekoppelt sind, und/oder
- eine Mehrzahl an Quersstreben (49), welche mit dem ersten und zweiten Oberholm (43, 45) gekoppelt sind.

12. Zugangssystem (1, 1') nach einem der Ansprüche 1 bis 11,
wobei das Zugangssystem (1, 1') eine mobile Sicherungseinrichtung (39) zur Sicherung von Bedienpersonal an dem Verschubwagen (15) und/oder der Tragstruktur (9) aufweist.

13. Zugangssystem (1') nach einem der Ansprüche 1 bis 12,
wobei das Zugangssystem (1, 1') eine Steuereinrichtung (33) umfasst, welche dazu eingerichtet ist, die Position des Verschubwagens (15) und/oder der Arbeitsbühne (17, 17a, 17b) zu erfassen, und den Antrieb (27) des Verschubwagens (15) und/oder der Arbeitsbühne (17, 17a, 17b) zu steuern.

14. Verschubwagen (15) zur Verwendung in einem Zugangssystem (1, 1 nach einem der vorstehenden Ansprüche, wobei der Verschubwagen (15) dazu eingerichtet ist, auf einer Fahrspur (11) einer Tragstruktur (9) entlang eines gesamten Gleisabschnitts (3, 5) zu fahren, und derart verfahrbar ist, dass er an eine Öffnung (8) eines Kesselwagens (7) angenähert werden kann, um einen Zugang zu der verschließbaren Öffnung (8) des jeweiligen Kesselwagens (7) bereitzustellen, wobei der Verschubwagen (15) einen auf der Arbeitsbühne (17, 17a, 17b) angeordneten Schutzkorb (23) zum Sichern des Bedienpersonals aufweist.

15. Verfahren zum Bereitstellen eines Zugangs zu einer verschließbaren Öffnung (8) an der Oberseite eines Eisenbahnkesselwagens (7) mittels eines Zugangssystems nach einem der Ansprüche 1 bis 13,
wobei das Verfahren die Schritte umfasst:
- Bereitstellen mehrerer Kesselwagen (7) auf einem Gleisabschnitt (3, 5) in Gleislängsrichtung aufgereiht in einer Be- und Entladeposition benachbart zu einer Tragstruktur (9),
- Verfahren eines Verschubwagens (15) auf einer Fahrspur (11) der Tragstruktur (9) entlang des Gleisabschnitts (3, 5), sodass er an die Öffnung (8) eines Kesselwagens (7) angenähert wird,
- Bereitstellen eines Zugangs zu der verschließbaren Öffnung (8) des jeweiligen Kesselwagens (7),
wobei das Verfahren ferner den Schritt umfasst:
- Verfahren des Verschubwagens (15) auf der Fahrspur (11) der Tragstruktur (9) entlang des Gleisabschnitts (3, 5), sodass er an die Öffnung (8) eines weiteren auf dem Gleisabschnitt (3, 5) angeordneten, vorzugsweise benachbarten, Kesselwagens (7) angenähert wird,
wobei vorzugsweise das Bereitstellen eines Zugangs zu der verschließbaren Öffnung (8) des jeweiligen Kesselwagens (7) umfasst:
- Verschwenken der Arbeitsbühne (17, 17a, 17b) von einer Parkposition in eine Arbeitsposition, in welcher die Arbeitsbühne (17, 17a, 17b) mit der jeweiligen Oberseite des Kesselwagens (7) in Anlage bringbar ist.

## Claims

1. Access system (1, 1 ') for rail tank cars (7), comprising:
- at least one track section (3, 5) for accommodating a plurality of tank cars (7) in a loading and unloading position, each tank car (7) having a closable opening (8) on its top side,
- a support structure (9) arranged adjacent to the track section (3, 5) and extending in the longitudinal direction of the track along the entire track section, having at least one access area (13) and a track (11) extending in the longitudinal direction of the track, and
- a shifting vehicle (15) adapted to travel on the track (11) of the support structure (9) along the entire track section (3, 5) and movable in such a manner that it can be brought close to the opening (8) of each of the tank cars (7) to provide access to the closable opening (8) of the respective tank car (7).

2. Access system (1, 1') according to Claim 1, wherein the shifting vehicle (15) comprises at least one working platform (17, 17a, 17b) adapted to provide access to the closable opening (8) of a tank car (7), wherein the working platform (17, 17a, 17b) can be brought in contact with the top side of the tank car (7) when the shifting vehicle (15) is brought close to the opening (8) of a tank car (7).

3. Access system (1, 1') according to Claim 2, wherein the working platform (17, 17a, 17b) is pivotably mounted on the shifting vehicle (15) and is pivotable from a parking position into a working position in which the working platform (17, 17a, 17b) can be brought into contact with the respective top side of the tank car (7), wherein preferably the working platform (17, 17a, 17b) is pivotably mounted on the shifting vehicle (15) transversely to the longitudinal direction of the track.

4. Access system (1') according to one of Claims 2 or 3, wherein the shifting vehicle (15) comprises a drive (27) for pivoting the working platform (17, 17a, 17b), preferably a pneumatic or hydraulic drive.

5. Access system (1, 1') according to any one of the preceding claims, wherein the shifting vehicle (15) and/or the track (11) has a plurality of rollers (53, 55, 59) for moving the shifting vehicle (15) along the track (11), wherein preferably the shifting vehicle (15) and/or the track (11) comprises at least one pair of lateral guide rollers (59) on both sides for laterally guiding the shifting vehicle (15), and/or wherein preferably at least one pair of rollers (53) is coupled to the shifting vehicle (15) and is in contact with a ground-side contact surface of the track (11).

6. Access system (1') according to one of the preceding claims, wherein the shifting vehicle (15) has a drive (25) for moving the shifting vehicle (15) in the longitudinal direction of the track and/or has a locking device (29) for locking the shifting vehicle (15) and the support structure (9), and/or has a circumferential railing (19) and at least one front-side access (21).

7. Access system (1, 1') according to any one of Claims 2 to 6, wherein the shifting vehicle (15) comprises a protective cage (23) arranged on the working platform (17, 17a, 17b) for securing the operator.

8. Access system (1, 1') according to any one of the preceding claims, wherein the shifting vehicle (15) comprises at least one lighting means (35) for lighting the shifting vehicle (15) and/or the top side of the tank cars (7) and/or comprises a flashing light (37).

9. Access system (1, 1') according to any one of Claims 1 to 8, wherein the support structure (9) comprises a platform (31) extending substantially horizontally in the longitudinal direction of the track.

10. Access system (1, 1') according to any one of Claims 1 to 9, wherein the track section (3, 5) is a first track section (3, 5), and the access system (1, 1') further comprises a second track section (3, 5) for receiving a plurality of tank cars (7), and wherein the support structure (9) is arranged between the first and second track sections (3, 5).

11. Access system (1, 1') according to any one of Claims 1 to 10, wherein a support structure (9) is formed in the manner of a truss, comprising:
- a bottom beam (41) extending in the track longitudinal direction,
- a first top beam (43) extending in the track longitudinal direction, and
- a second top beam (45) extending in the track longitudinal direction, which is horizontally spaced apart from the first top beam (43), wherein preferably the support structure (9) further comprises:
- a plurality of diagonal struts (49) coupled to the bottom beam (41) and the first and/or second top beam (43, 45), and/or
- a plurality of transverse struts (49) coupled to the first and second top beam (43, 45).

12. Access system (1, 1') according to any one of Claims 1 to 11, wherein the access system (1, 1') comprises a mobile securing device (39) for securing operators to the shifting vehicle (15) and/or the support structure (9).

13. Access system (1') according to any one of Claims 1 to 12, wherein the access system (1, 1 ') comprises a control device (33), which is adapted to detect the position of the shifting vehicle (15) and/or the working platform (17, 17a, 17b), and to control the drive (27) of the shifting vehicle (15) and/or the working platform (17, 17a, 17b).

14. Shifting vehicle (15) for use in an access system (1, 1') according to any one of the preceding claims, wherein the shifting vehicle (15) is adapted to travel on a track (11) of a support structure (9) along an entire track section (3, 5) and is movable in such a manner that it can be brought close to an opening (8) of a tank car (7) to provide access to the closable opening (8) of the respective tank car (7), wherein the shifting vehicle (15) comprises a protective cage (23) arranged on the working platform (17, 17a, 17b) for securing the operator.

15. Method for providing access to a closable opening (8) at the top of a rail tank car (7) by means of an access system according to any one of Claims 1 to 13, the method comprising the steps of:
- providing a plurality of tank cars (7) lined up on a track section (3, 5) in the longitudinal direction of the track in a loading and unloading position adjacent to a support structure (9),
- moving a shifting vehicle (15) on a track (11) of the support structure (9) along the track section (3, 5) so that it approaches the opening (8) of a tank car (7),
- providing access to the closable opening (8) of the respective tank car (7), the method further comprising the step of:
- moving the shifting vehicle (15) along the track (11) of the support structure (9) along the track section (3, 5) so that it approaches the opening (8) of another, preferably adjacent, tank car (7) arranged on the track section (3, 5),
preferably comprising providing access to the closable opening (8) of the respective tank car (7):
- swiveling the working platform (17, 17a, 17b) from a parking position into a working position in which the working platform (17, 17a, 17b) can be brought into contact with the respective top side of the tank car (7).

## Revendications

1. Système d'accès (1, 1') pour une voiture-citerne ferroviaire (7) comprenant :
- au moins une section de voie (3, 5) pour la réception de plusieurs voitures-citernes (7) dans une position de charge et décharge, dans lequel chaque voiture-citerne (7) présente respectivement une ouverture (8) refermable au niveau de son côté supérieur,
- une structure porteuse (9) s'étendant dans le sens longitudinal de voie le long de la section de voie entière, agencée de manière contiguë à la section de voie (3, 5) avec au moins une zone d'accès (13) et une voie de roulement (11) s'étendant dans le sens longitudinal de voie, et
- une voiture de déplacement (15) qui est conçue afin de rouler sur la voie de roulement (11) de la structure porteuse (9) le long de la section de voie entière (3, 5), et est déplaçable de telle manière qu'elle puisse s'approcher de l'ouverture (8) de chaque voiture-citerne (7) afin de fournir un accès à l'ouverture (8) refermable de la voiture-citerne (7) respective.

2. Système d'accès (1, 1') selon la revendication 1,
dans lequel la voiture de déplacement (15) présente au moins une plateforme de travail (17, 17a, 17b) qui est conçue afin de fournir un accès à l'ouverture (8) refermable d'une voiture-citerne (7), dans lequel de préférence, la plateforme de travail (17, 17a, 17b) peut être amenée en appui avec le côté supérieur de la voiture-citerne (7), lorsque la voiture de déplacement (15) s'approche de l'ouverture (8) d'une voiture-citerne (7).

3. Système d'accès (1, 1') selon la revendication 2,
dans lequel la plateforme de travail (17, 17a, 17b) est montée de manière pivotante au niveau de la voiture de déplacement (15), et est pivotante d'une position de stationnement dans une position de travail, dans laquelle la plateforme de travail (17, 17a, 17b) peut être amenée en appui avec le côté supérieur respectif de la voiture-citerne (7), dans lequel de préférence, la plateforme de travail (17, 17a, 17b) est montée de manière pivotante au niveau de la voiture de déplacement (15) transversalement au sens longitudinal de la voie.

4. Système d'accès (1') selon l'une quelconque des revendications 2 ou 3,
dans lequel la voiture de déplacement (15) présente un entraînement (27) pour le pivotement de la plateforme de travail (17, 17a, 17b), de préférence un entraînement pneumatique ou hydraulique.

5. Système d'accès (1, 1') selon l'une quelconque des revendications précédentes,
dans lequel la voiture de déplacement (15) et/ou la voie de roulement (11) présente une pluralité de rouleaux (53, 55, 59) pour le déplacement de la voiture de déplacement (15) le long de la voie de roulement (11), dans lequel de préférence, la voiture de déplacement (15) et/ou la voie de roulement (11) présente de part et d'autre au moins une paire de rouleaux de guidage latéral (59) pour le guidage latéral de la voiture de déplacement (15), et/ou dans lequel de préférence, au moins une paire de rouleaux (53) est couplée à la voiture de déplacement (15) et est en appui contre une surface de contact côté sol de la voie de roulement (11).

6. Système d'accès (1') selon l'une quelconque des revendications précédentes,
dans lequel la voiture de déplacement (15)
présente un entraînement (25) pour le déplacement de la voiture de déplacement (15) dans le sens longitudinal de voie
et/ou
un dispositif d'arrêt (29) pour l'arrêt de la voiture de déplacement (15) et de la structure porteuse (9), et/ou
une balustrade tournante (19) et au moins un accès côté avant (21).

7. Système d'accès (1, 1') selon l'une quelconque des revendications 2 à 6,
dans lequel la voiture de déplacement (15) présente un panier de protection (23) agencé sur la plateforme de travail (17, 17a, 17b) pour la protection du personnel opérateur.

8. Système d'accès (1, 1') selon l'une quelconque des revendications précédentes,
dans lequel la voiture de déplacement (15) présente au moins un moyen d'éclairage (35) pour l'éclairage de la voiture de déplacement (15) et/ou du côté supérieur de la voiture-citerne (7) et/ou
un clignotant (37).

9. Système d'accès (1, 1') selon l'une quelconque des revendications 1 à 8,
dans lequel la structure porteuse (9) présente une plateforme (31) s'étendant sensiblement horizontalement dans le sens longitudinal de voie.

10. Système d'accès (1, 1') selon l'une quelconque des revendications 1 à 9,
dans lequel la section de voie (3, 5) est une première section de voie (3, 5), et le système d'accès (1, 1') présente de plus une seconde section de voie (3, 5) pour la réception de plusieurs voitures-citernes (7), et
dans lequel la structure porteuse (9) est agencée entre la première et seconde section de voie (3, 5).

11. Système d'accès (1, 1') selon l'une quelconque des revendications 1 à 10,
dans lequel la structure porteuse (9) est réalisée comme un treillis, comprenant :
- un longeron inférieur (41) côté sol s'étendant dans le sens longitudinal de voie,
- un premier longeron supérieur (43) s'étendant dans le sens longitudinal de voie, et
- un second longeron supérieur (45) s'étendant dans le sens longitudinal de voie qui est agencé à distance horizontalement du premier longeron supérieur (43),
dans lequel de préférence la structure porteuse (9) comporte de plus :
- une pluralité d'entretoises diagonales (49) qui sont couplées au longeron inférieur (41) et au premier et/ou second longeron supérieur (43, 45), et/ou
- une pluralité d'entretoises transversales (49) qui sont couplées au premier et second longeron supérieur (43, 45).

12. Système d'accès (1, 1') selon l'une quelconque des revendications 1 à 11,
dans lequel le système d'accès (1, 1') présente un dispositif de protection (39) mobile pour la protection du personnel opérateur au niveau de la voiture de déplacement (15) et/ou de la structure porteuse (9).

13. Système d'accès (1') selon l'une quelconque des revendications 1 à 12,
dans lequel le système d'accès (1, 1') comporte un dispositif de commande (33) qui est conçu afin de détecter la position de la voiture de déplacement (15) et/ou de la plateforme de travail (17, 17a, 17b), et de commander l'entraînement (27) de la voiture de déplacement (15) et/ou de la plateforme de travail (17, 17a, 17b).

14. Voiture de déplacement (15) pour l'utilisation dans un système d'accès (1, 1') selon l'une quelconque des revendications précédentes, dans lequel la voiture de déplacement (15) est conçue afin de rouler sur une voie de roulement (11) d'une structure porteuse (9) le long d'une section de voie entière (3, 5), et est déplaçable de telle manière qu'elle puisse s'approcher d'une ouverture (8) d'une voiture-citerne (7) afin de fournir un accès à l'ouverture refermable (8) de la voiture-citerne (7) respective,
dans lequel la voiture de déplacement (15) présente un panier de protection (23) agencé sur la plateforme de travail (17, 17a, 17b) pour la protection du personnel opérateur.

15. Procédé de fourniture d'un accès à une ouverture (8) refermable au niveau du côté supérieur d'une voiture-citerne ferroviaire (7) au moyen d'un système d'accès selon l'une quelconque des revendications 1 à 13,
dans lequel le procédé comporte les étapes :
- la fourniture de plusieurs voitures-citernes (7) sur une section de voie (3, 5) alignées dans le sens longitudinal de voie dans une position de charge et décharge de manière contiguë à une structure porteuse (9),
- le déplacement d'une voiture de déplacement (15) sur une voie de roulement (11) de la structure porteuse (9) le long de la section de voie (3, 5) de sorte qu'elle s'approche de l'ouverture (8) d'une voiture-citerne (7),
- la fourniture d'un accès à l'ouverture refermable (8) de la voiture-citerne respective (7),
dans lequel le procédé comporte de plus l'étape :
- le déplacement de la voiture de déplacement (15) sur la voie de roulement (11) de la structure porteuse (9) le long de la section de voie (3, 5) de sorte qu'elle s'approche de l'ouverture (8) d'une autre voiture-citerne (7) agencée sur la section de voie (3, 5), de préférence contiguë,
dans lequel de préférence, la fourniture d'un accès à l'ouverture (8) refermable de la voiture-citerne (7) respective comporte :
- le pivotement de la plateforme de travail (17, 17a, 17b) d'une position de stationnement dans une position de travail, dans laquelle la plateforme de travail (17, 17a, 17b) peut être amenée en appui avec le côté supérieur respectif de la voiture-citerne (7).
